# EUROPÄISCHE PATENTSCHRIFT

(11) **EP 0 616 135 B1**
(45) Veröffentlichungstag und Bekanntmachung des Hinweises auf die Patenterteilung: **05.08.1998**
(21) Anmeldenummer: 94103034.8
(22) Anmeldetag: 01.03.1994
(51) Int. Cl.: F16B 7/04, E04B 1/58, F16B 12/10, F16B 12/32, F16B 12/40, F16B 7/18

(54) **Verbindungseinrichtung für Profilteile**
Connecting arrangement for profiles
Dispositif de raccordement pour éléments profilés

(30) Priorität: 19.03.1993 DE 9304053
(43) Veröffentlichungstag der Anmeldung: 21.09.1994
(73) Patentinhaber: FESTO AG & Co, 73734 Esslingen (DE)
(72) Erfinder: Stoll, Kurt, Dipl.-Ing., D-73732 Esslingen (DE)
(74) Vertreter: Abel, Martin, Dipl.-Ing.

(56) Entgegenhaltungen:
- EP-A- 0 490 086
- DE-U- 9 200 645

## Beschreibung

Die Erfindung betrifft eine Verbindungseinrichtung für Profilteile, die zum Aufbau von Konstruktionen wie Tische, Regale, Gestelle oder dergleichen verwendbar sind, zur Verbindung eines ersten Profilteils mit einem quer zu diesem verlaufenden, sich mit einer Stirnseite gegen eine Längsseite des ersten Profilteils abstützenden Querteil, das insbesondere von einem zweiten Profilteil gebildet ist, wobei das erste Profilteil an der dem Querteil zugewandten Längsseite eine sich in Längsrichtung erstreckende Verankerungsnut aufweist, und wobei ein an dem Querteil festgelegtes oder festlegbares Verbindungselement vorgesehen ist, das eine Kraftübertragungspartie aufweist, die auf entgegengesetzten Seiten von zwei mittels eines Spannelementes in Längsrichtung der Verankerungsnut relativ zueinander verspannbaren Zugelementen einer in der Verankerungsnut des ersten Profilteils verankerten oder verankerbaren Zugeinrichtung beaufschlagbar ist, um auf das Verbindungselement eine das Querteil mit der Stirnseite voraus in Richtung des ersten Profilteils heranziehende Zugkraft auszuüben.

Unter Verwendung von stangenähnlichen Profilteilen aufgebaute Konstruktionen verfügen häufig über Verbindungsstellen, an denen ein Profilteil stirnseitig stumpf an die Längsseite eines anderen Profilteils angesetzt ist, so daß die beiden Profilteile im rechten Winkel zueinander verlaufen. Die Verbindung der beiden Profilteile an der Verbindungsstelle erfolgt oft durch unmittelbares Verschrauben, indem zunächst an der erforderlichen Stelle Verbindungsbohrungen gesetzt, anschließend Gewinde geschnitten und zuletzt die notwendigen Verbindungsschrauben eingeschraubt werden. Die Herstellung einer derartigen Verbindung ist sehr aufwendig, nicht universell, benötigt besondere Werkzeuge und verursacht Späne.

Im Rahmen des deutschen Gebrauchsmusters G 92 00 645 wurde bereits eine Verbindungseinrichtung erläutert, die eine spanlose Verbindung gestattet. Man verwendet Winkelelemente, die unter Verwendung von Klemmschrauben und Nutensteinen gleichzeitig in Verankerungsnuten beider Profilteile festgelegt werden. Trotz der unbestritten vorhandenen Vorteile ist eine derartige Verbindungseinrichtung weiterhin recht umständlich zu handhaben. Darüber hinaus findet kaum eine Verspannung der beiden Profilteile in Längsrichtung des stumpf anstoßenden Querteils statt, was sich nachteilig auf die Stabilität auswirken kann.

Mit der EP-A-0 490 086 wurde daher bereits eine Verbindungseinrichtung der eingangs genannten Art vorgeschlagen, bei der ein am Querteil verankertes Verbindungselement in die Verankerungsnut des ersten Profilteils ragt und auf entgegengesetzten Seiten von Spannelementen beaufschlagt wird, die durch ein Zugelement so gegen eine Kraftübertragungspartie des Verbindungselementes drücken, daß dieses in Richtung Nutgrund gezogen wird und dabei das zugeordnete Querteil gegen die Längsseite des ersten Profilelementes zieht. Dabei durchgreift das Verbindungselement ein Loch des einen Spannelementes, das über beidseits der Kraftübertragungspartie liegende Bestandteile verfügt, deren einer das zweite Zugelement sowie das gegen dieses zweite Zugelement drückbare Spannelement trägt. Bei Betätigung des Spannelementes wird das zweite Zugelement relativ zum ersten Zugelement verschoben, so daß Fälle auftreten können, bei denen die maßgebliche Krafteinleitung auf eine Seite der Kraftübertragungspartie konzentriert ist, was einem gleichmäßigen Zusammenspannen des Querteils und des ersten Profilteils abträglich ist.

Es ist die Aufgabe der vorliegenden Erfindung, eine Verbindungseinrichtung der eingangs genannten Art zu schaffen, die bei einfacher Handhabung eine zuverlässige feste Verbindung zwischen einem Profilteil und einem bezüglich diesem quer verlaufenden, insbesondere ebenfalls als Profilteil ausgebildeten Querteil ermöglicht.

Zur Lösung dieser Aufgabe ist vorgesehen, daß die beiden Zugelemente jeweils insgesamt auf einander entgegengesetzten Seiten der Kraftübertragungspartie angeordnet sind, wobei das an den beiden Zugelementen angreifende Spannelement an der dem Nutgrund der Verankerungsnut zugewandten Stirnseite des Verbindungselementes vorbeigeführt ist.

Auf diese Weise lassen sich quer zueinander verlaufende Profilteile fest miteinander verbinden, wobei das Querteil fest gegen die Längsseite des ersten Profilteils gespannt wird, so daß sich ein äußerst stabiler Zusammenhalt einstellt. Da an den Profilteilen praktisch keine Manipulationen vorzunehmen sind, können sie nach dem Lösen der Verbindung jederzeit anderweitig wiederverwendet werden. Die Befestigung des Verbindungselementes an dem Querteil erfolgt auf beliebige Weise, beispielsweise indem man es mittels eines selbstschneidenden Gewindeabschnittes in eine am Querteil bereits vorhandene stirnseitige Bohrung einschraubt. Seitens des ersten Profilteils ist dem Verbindungselement eine Zugeinrichtung zugeordnet, die über zwei Zugelement verfügt, mit dem sich das Verbindungselement längs der Verankerungsnut seitlich beaufschlagen läßt. Bei dieser Beaufschlagung wird das Verbindungselement in Tiefenrichtung der zugeordneten Verankerungsnut herangezogen, wobei das verankerte Querteil gegen das erste Profilteil gespannt wird und sich ein fester Zusammenhalt ergibt. Eine optimale Handhabung ergibt sich, da die Zugeinrichtung zwei die Kraftübertragungspartie an entgegengesetzten Seiten flankierende Zugelemente aufweist, die mittels eines Spannelements im Sinne einer gegenseitigen Annäherung beaufschlagbar sind, so daß die dazwischenliegende Kraftübertragungspartie im wesentlichen symmetrisch und verkantungsfrei beaufschlagt wird.

Vorteilhafte Weiterbildungen der Erfindung sind in den Unteransprüchen aufgeführt.

Es findet also zweckmäßigerweise eine Umlenkung der Kraftrichtung statt. Diese Umlenkung wird in vorteilhafter Weise begünstigt, wenn im Drückkontaktbereich zwischen dem Zugelement und der Kraftübertragungspartie an mindestens einem und vorzugsweise an beiden Teilen eine dem jeweils anderen Teil zugewandte Schubfläche vorgesehen ist, die bezüglich einer rechtwinklig zur Längsachse der Verankerungsnut verlaufenden Bezugsebene geneigt verläuft. Wird nun das Zugelement in Richtung der Kraftübertragungspartie bewegt, so gleiten die Schubflächen aneinander ab und bewirken, daß sich die Kraftübertragungspartie in Richtung des Nutgrundes relativ zum ersten Profilteil verlagert.

Zur Verankerung der Zugeinrichtung am ersten Profilteil dienen zweckmäßigerweise die beiden Zugelemente, die nach Art eines Nutensteins in der Verankerungsnut aufgenommen sein können.

Eine gute Gleitführung zwischen der Kraftübertragungspartie und einem jeweiligen Zugelement stellt sich ein, wenn letzteres an der der Kraftübertragungspartie zugewandten Stirnseite eine Ausnehmung aufweist, in die die Kraftübertragungspartie zumindest teilweise hineinragen kann, wobei die innere Begrenzungsfläche der Ausnehmung vorzugsweise die gegebenenfalls vorhandene Schubfläche bildet.

Nachfolgend wird die Erfindung anhand der beiliegenden Zeichnung näher erläutert. In dieser zeigen:
- Figur 1: eine bevorzugte Bauform der Verbindungseinrichtung in Gebrauchsstellung, mit Blickrichtung längs des ersten Profilteils gemäß Pfeil I aus Figur 2, wobei von dem Querteil nur der der Verbindungsstelle zugeordnete Endabschnitt gezeigt ist,
- Figur 2: die Anordnung aus Figur 1 im Längsschnitt gemäß Schnittlinie II-II, wobei das erste Profilteil der Einfachheit halber nur teilweise geschnitten gezeigt ist, und
- Figur 3: die bei der Anordnung gemäß Figuren 1 und 2 verwendete Verbindungseinrichtung in explosionsartiger perspektivischer Einzeldarstellung.

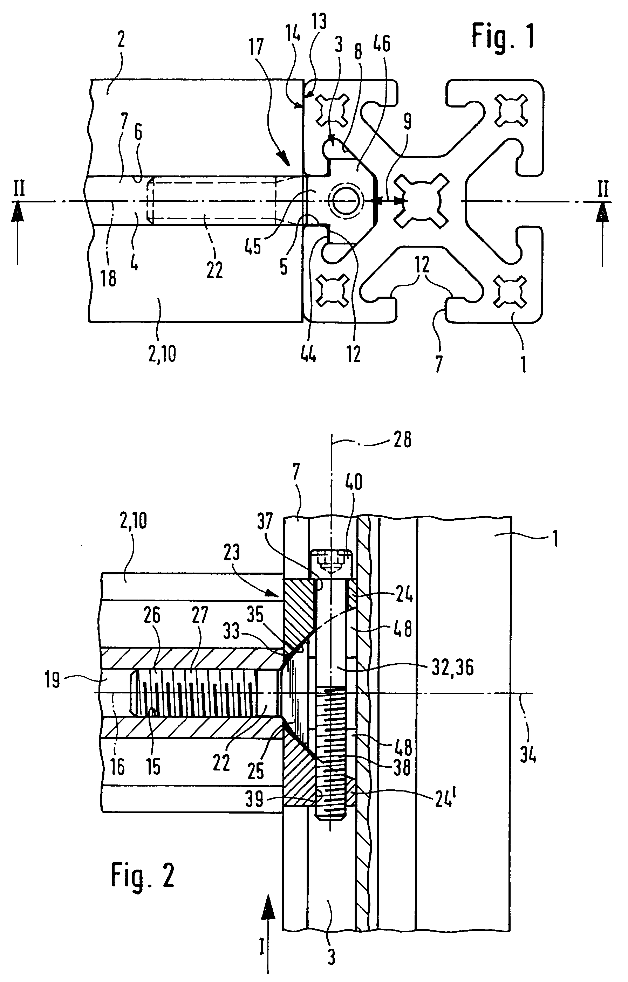

In den Figuren 1 und 2 erkennt man zwei stangenförmige Profilteile 1, 2 mit linearer Erstreckung, die zweckmäßigerweise als Strangpreßteile ausgebildet sind und insbesondere aus Aluminiummaterial bestehen. Es handelt sich beispielsgemäß um Profilteile gleicher Art mit einem vorzugsweise quadratischen Rechteckquerschnitt. In jeder der sich so ergebenden längsseitigen Außenflächen der Profilteile 1, 2 ist mindestens eine Verankerungsnut 3, 4 ausgebildet, die sich über die gesamte Länge des jeweils zugeordneten Profilteils 1, 2 erstreckt und zu beiden Stirnseiten hin offen ist. Über eine schlitzartige Längsöffnung 5, 6 öffnet sich eine jeweilige Verankerungsnut 3, 4 zudem zur jeweils zugeordneten Profilteil-Außenfläche.

Die Verankerungsnuten 3, 4 der beispielsgemäßen Profilteile 1, 2 verfügen untereinander über den gleichen Querschnitt. Sie haben einen sich an die zugeordnete Außenfläche anschließenden Nuthals 7, der einerseits - nach außen hin - die zugeordnete Längsöffnung 5, 6 bildet und andererseits - in Tiefenrichtung (Pfeil 9) der zugeordneten Verankerungsnut 3, 4 - in einen breiteren Verankerungsabschnitt 8 übergeht. Somit ergibt sich eine Art T-Nut, wobei die seitlich neben dem Nuthals 7 liegenden und dem Nutgrund zugewandten Flächenabschnitte des Verankerungsabschnittes 8 Abstützflächen 12 bilden, die sich insbesondere über die gesamte Nutlänge erstrecken.

Die beiden zu verbindenden Profilteile 1, 2 sind beispielsgemäß im rechten Winkel zueinander angeordnet. Das zweite Profilteil 2 bildet ein Querteil 10, das mit seiner einen Stirnseite 13 an eine Längsseite 14 des ersten Profilteiles 1 angestoßen ist, die von einer der vier längs verlaufenden Außenflächen des ersten Profilteils 1 gebildet ist. Die Ausrichtung ist dabei so getroffen, daß die der besagten Längsseite 14 zugeordnete erste Verankerungsnut 3 des ersten Profilteils 1 von der Längsachse 16 einer Befestigungsvertiefung 15 getroffen wird, die an dem Querteil 10 vorgesehen ist und zu dessen Stirnseite 13 hin ausmündet. Als Befestigungsvertiefung 15 dient zweckmäßigerweise eine kanalförmige Durchgangsöffnung 19, die zweckmäßigerweise jedes der beiden Profilteile 1, 2 in Längsrichtung durchzieht und standardmäßig vorhanden sein kann. Zweckmäßigerweise richtet man die Profilteile 1, 2 zudem so aus, daß die erste Verankerungsnut 3 des ersten Profilteils 1 in einer gemeinsamen Ebene mit einer zweiten Verankerungsnut 4 des zweiten Profilteils 2 verläuft. Bevorzugt stoßen die beiden Profilteile 1, 2 unmittelbar und ohne dazwischenliegendes Zwischenteil aneinander an.

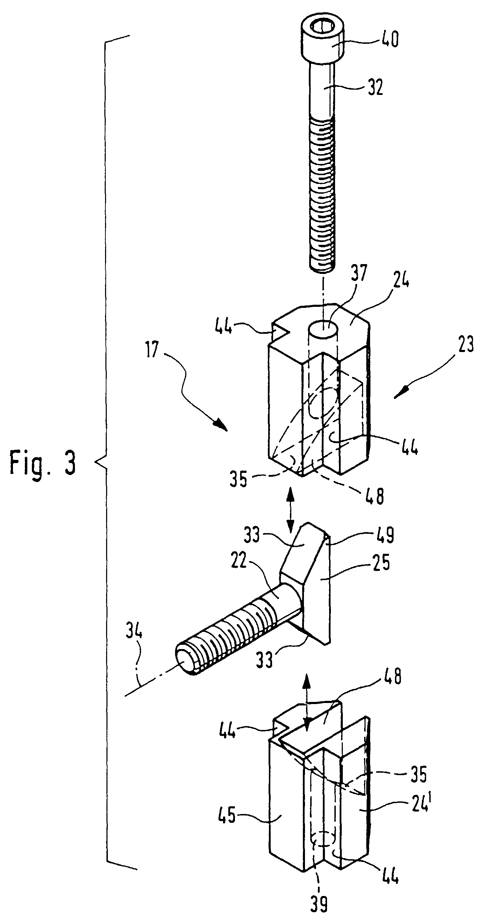

Das erste Profilteil 1 und das Querteil 10 sind in der gezeigten Ausrichtung einander gegenüber fixiert und in Längsrichtung 18 des Querteils 10 zusammengespannt, wobei die Stirnseite 13 des Querteils 10 gegen die Längsseite 14 des ersten Profilteils 1 angepreßt wird. Ursache für eine derartige Verbindung ist die vorhandene Verbindungseinrichtung 17, die in Figur 3 in Einzeldarstellung gezeigt ist. Sie umfaßt ein Verbindungselement 22, das einerseits lösbar an dem Querteil 10 festgelegt ist und andererseits über eine Zugeinrichtung 23 mit dem ersten Profilteil 1 in Verbindung steht.

Das Verbindungselement 22 verfügt über eine Kraftübertragungspartie 25, die in der Zugeinrichtung 23 verankert ist, welche letztere ihrerseits in der ersten Verankerungsnut 3 des ersten Profilteils 1 verankert ist. Die Befestigung am Querteil 10 erfolgt über eine Befestigungspartie 26 des Verbindungselements 22, die mit der Befestigungsvertiefung 15 zusammenarbeitet. Die Befestigungspartie 26 ist beim Ausführungsbeispiel von einer Gewindepartie gebildet, die an einem schaftähnlichen Abschnitt 27 des Verbindungselements 22 vorgesehen ist, das in die Befestigungsvertiefung 15 eingeschraubt wurde. Bevorzugt besitzt die Befestigungspartie 26 ein selbstschneidendes Außengewinde, so daß beim Einschrauben in die Befestigungsvertiefung 15 das erforderliche Gegengewinde selbsttätig eingeschnitten oder eingedrückt wird und man auf Vorbereitungsarbeiten verzichten kann.

Es versteht sich, daß bei entsprechender Ausgestaltung der Befestigungspartie 26 eine beliebige andere Befestigungseinrichtung an die Stelle der Befestigungsvertiefung 15 des Querteils 10 treten kann. Die beispielsgemäße Ausgestaltung ist allerdings besonders zweckmäßig, da die Befestigungsvertiefung 15 regelmäßig vorhanden ist, sie verläuft beim Ausführungsbeispiel im Querschnittszentrum des Querteils 10.

Der schaftähnliche Abschnitt 27 schließt sich an die Kraftübertragungspartie 25 an, die über die Längsöffnung 5 bzw. den zugeordneten Nuthals 7 in die erste Verankerungsnut 3 eintaucht. Dort ist sie in Längsrichtung 28 der betreffenden ersten Verankerungsnut 3 beidseits von je einem Zugelement 24, 24' der Zugeinrichtung 23 flankiert. Unter Vermittlung eines Spannelements 32 lassen sich die beiden Zugelemente 24,24' in Längsrichtung 28 der Verankerungsnut 3 gegen die Kraftübertragungspartie 25 spannen. Diese Beaufschlagung bewirkt die Ausübung einer Zugkraft in Tiefenrichtung 9 auf das Verbindungselement 22. Auf diese Weise wird das mit dem Verbindungselement 22 axial unverrückbar verbundene Querteil 10 mit seiner Stirnseite 13 gegen die Längsseite 14 herangezogen und angepreßt.

Das Verbindungselement 22 des Ausführungsbeispiels ist schraubenähnlich ausgebildet und verfügt über einen an dem schaftähnlichen Abschnitt 27 sitzenden Kopf, der die Kraftübertragungspartie 25 bildet. Letztere hat eine Flachgestalt mit einem bei Blick in Richtung der Längsachse 16 rechteckigem Grundriß. Die Breite ist so gewählt, daß ein Einsetzen in Tiefenrichtung 9 ohne Verkanten möglich ist.

Die den Zugelementen 24, 24' zugewandten Stirnflächen der Kraftübertragungspartie 25 bilden voneinander abgewandte Schubflächen 33, die bezüglich einer rechtwinkelig zur Längsachse 28 verlaufenden Bezugsebene einen derart geneigten Verlauf besitzen, daß sie sich in Tiefenrichtung 9 zunehmend von der die Zugachse 34 bildenden Längsachse des Verbindungselements 22 entfernen. Bei den Schubflächen 33 handelt es sich zweckmäßigerweise um Schrägflächen mit insbesondere ebener Gest.alt. In Seitenansicht gesehen entspricht der Verlauf der beiden Schubflächen 33 beim Ausführungsbeispiel dem Verlauf der Seitenflächen eines gleichschenkligen Trapezes.

Jeder Schubfläche 33 der Kraftübertragungspartie 25 liegt eine zugewandte Schubfläche 35 des zugeordneten Zugelementes 24, 24' gegenüber. Deren Neigung ist mit derjenigen der Schubflächen 33 der Kraftübertragungspartie 25 identisch. Auf diese Weise können die einander zugewandten Schubflächen-Paare 33, 35 unter Bildung eines Drückkontaktbereiches flächig aneinander anliegen.

Das Spannelement 32 erstreckt sich in Längsrichtung 28 innerhalb des Verankerungsabschnittes 8 und verbindet die beiden Zugelemente 24, 24'. Beispielsgemäß ist es von einer Schraube 36 gebildet. Diese ist von der dem zweiten Zugelement 24' abgewandten Stirnseite her durch eine in Längsrichtung 8 verlaufende Durchgangsöffnung 37 des ersten Zugelements 24 hindurchgesteckt und mit ihrem Gewindeabschnitt 38 in eine ebenfalls axial verlaufende Gewindebohrung 39 des zweiten Zugelements 24' eingeschraubt. Indem der Schraubenkopf 40 an der äußeren Stirnseite des ersten Zugelements 24 anliegt, läßt sich durch Verdrehen der Schraube 36 der in Längsrichtung 28 gemessene Abstand zwischen den beiden Zugelemente 24, 24' variieren.

Zieht man die Schraube 36 an, so bewegen sich die Zugelemente 24, 24' aufeinander zu, wobei die insbesondere unter einem Winkel von 45° zu der erwähnten Bezugsebene verlaufenden Schubflächen 33, 35 aneinander abgleiten. Dies bewirkt die erwähnte Zugbeaufschlagung des Verbindungselements 22 in Tiefenrichtung 9, da die Zugelemente 24, 24' zwar längsbeweglich in der zugeordneten Verankerungsnut 3 aufgenommen sind, in diesbezüglicher Querrichtung jedoch profilteilfest abgestützt sind.

Besagte Abstützung beruht beispielsgemäß darauf, daß an jedem Zugelement 24, 24' Abstützpartien 44 vorgesehen sind, die sich im Verankerungsabschnitt 8 befinden und den nutseitigen Abstützflächen 12 gegenüberliegen. Sie sind insbesondere von Schulterpartien gebildet, die am jeweiligen Zugelement 24, 24' einen dem jeweiligen Nutgrund entgegengesetzten Zentriervorsprung 45 längsseits flankieren, der im Nuthals 7 zu liegen kommt und zweckmäßigerweise mit den Seitenflächen des Nuthalses 7 lagestabilisierend zusammenarbeiten kann.

Die Abstützpartien 44 befinden sich an einem Halteabschnitt 46 des Zugelementes 24, 24', der im Vergleich zum anschließenden Zentriervorsprung 45 verbreitert ist und im Verankerungsabschnitt 8 sitzt. Die Durchgangsöffnung 37 und die Gewindebohrung 39 sind zweckmäßigerweise im zugeordneten Halteabschnitt 46 ausgebildet. Da die Kraftübertragungspartie 25 sich beim Ausführungsbeispiel in Tiefenrichtung 9 lediglich in den Nuthals 7 erstreckt, kann das Spannelement 42 im Verankerungsabschnitt 8 zwischen dem Nutgrund und der Kraftübertragungspartie 25 verlaufen. Der in Tiefenrichtung 9 gemessene Abstand zwischen der Kraftübertragungspartie 25 und dem vorbeigeführten Spannelement 32 ist so zu wählen, daß genügend Spielraum für die aufgrund der Zugbeaufschlagung stattfindende Verlagerung der Kraftübertragungspartie 25 zur Verfügung steht.

Die Zugelemente 24, 24' des Ausführungsbeispiels sind klotzähnlich ausgebildet. Die zugeordneten Schubflächen 35 befinden sich an der inneren Grundfläche einer Ausnehmung 48, die von der der Kraftübertragungspartie 25 zugewandten Stirnseite her in das jeweilige Zugelement 24, 24' eingebracht ist. Die Breite der Ausnehmungen 48, d.h. der Abstand ihrer beiden Seitenflächen, ist so gewählt, daß die Kraftübertragungspartie 25 mit der die zugeordnete Schubfläche 33 aufweisenden Endpartie 49 eintauchen kann. Die Seitenflächen der Ausnehmung 48 können hierbei seitliche Führungsflächen für die Kraftübertragungspartie 25 bilden, die eine Verkantungsfreie relative Axialbewegung zwischen den Zugelementen 24, 24' und der Kraftübertragungspartie 25 gewährleisten.

Es ist zweckmäßig, wenn die Ausnehmung 48 auch zum Nutgrund hin offen ist. Dies erleichtert vor allem die Herstellung.

## Patentansprüche

1. Verbindungseinrichtung für Profilteile, die zum Aufbau von Konstruktionen wie Tische, Regale, Gestelle oder dergleichen verwendbar sind, zur Verbindung eines ersten Profilteils (1) mit einem quer zu diesem verlaufenden, sich mit einer Stirnseite (13) gegen eine Längsseite (14) des ersten Profilteils (1) abstützenden Querteil (10), das insbesondere von einem zweiten Profilteil (2) gebildet ist, wobei das erste Profilteil (1) an der dem Querteil (10) zugewandten Längsseite (14) eine sich in Längsrichtung erstreckende Verankerungsnut (3) aufweist, und wobei ein an dem Querteil (10) festgelegtes oder festlegbares Verbindungselement (22) vorgesehen ist, das eine Kraftübertragungspartie (25) aufweist, die auf entgegengesetzten Seiten von zwei mittels eines Spannelementes (32) in Längsrichtung der Verankerungsnut (3) relativ zueinander verspannbaren Zugelementen (24, 24') einer in der Verankerungsnut (3) des ersten Profilteils (1) verankerten oder verankerbaren Zugeinrichtung (23) beaufschlagbar ist, um auf das Verbindungselement (22) eine das Querteil (10) mit der Stirnseite (13) voraus in Richtung des ersten Profilteils (1) heranziehende Zugkraft auszuüben, dadurch gekennzeichnet, daß die beiden Zugelemente (24, 24') jeweils insgesamt auf einander entgegengesetzten Seiten der Kraftübertragungspartie (25) angeordnet sind, wobei das an den beiden Zugelementen (24, 24') angreifende Spannelement (32) an der dem Nutgrund der Verankerungsnut (3) zugewandten Stirnseite des Verbindungselementes (22) vorbeigeführt ist.

2. Verbindungseinrichtung nach Anspruch 1, dadurch gekennzeichnet, daß im Drückkontaktbereich zwischen den Zugelementen (24, 24') und der Kraftübertragungspartie (25) an mindestens einem der beiden Teile (24, 24'; 25) eine dem jeweils anderen Teil (25; 24, 24') zugewandte Schubfläche (33, 35) vorgesehen ist, die bezüglich einer rechtwinklig zur Längsachse (28) der Verankerungsnut (3) verlaufenden Bezugsebene derart geneigt verläuft, daß die von den Zugelementen (24, 24') ausgeübte Drückkraft in die in Tiefenrichtung der Verankerungsnut (3) wirkende Zugkraft umgesetzt wird.

3. Verbindungseinrichtung nach Anspruch 2, dadurch gekennzeichnet, daß die Kraftübertragungspartie (25) zwei erste Schubflächen (33) aufweist, die jeweils flächig an einer zweiten Schubfläche (35) des jeweils zugeordneten Zugelementes (24, 24') anliegen.

4. Verbindungseinrichtung nach Anspruch 2 oder 3, dadurch gekennzeichnet, daß eine jeweilige Schubfläche (33, 35) derart geneigt ist, daß sie sich bei Annäherung an den Nutgrund zunehmend von der quer zur Längsrichtung (28) der Verankerungsnut (3) verlaufende Zugachse (34) des Verbindungselementes (22) entfernt.

5. Verbindungseinrichtung nach einem der Ansprüche 2 bis 4, dadurch gekennzeichnet, daß eine jeweilige Schubfläche (33, 35) als ebene Schrägfläche ausgebildet ist.

6. Verbindungseinrichtung nach einem der Ansprüche 1 bis 5, dadurch gekennzeichnet, daß das Spannelement (32) ein insbesondere von einer Schraube (36) gebildetes Gewindeteil ist, das sich am einen Spannelement (24) abstützen kann und mit dem anderen Spannelement (24') in Schraubverbindung steht.

7. Verbindungseinrichtung nach einem der Ansprüche 1 bis 6, dadurch gekennzeichnet, daß die Kraftübertragungspartie (25) zumindest teilweise versenkt in der Verankerungsnut angeordnet ist, wobei sie zweckmäßigerweise nicht oder nur geringfügig in einen sich an den Nuthals (7) der Verankerungsnut (3) anschließenden Verankerungsabschnitt (8) der Verankerungsnut (3) eintaucht.

8. Verbindungseinrichtung nach einem der Ansprüche 1 bis 7, dadurch gekennzeichnet, daß das Verbindungselement (22) eine insbesondere als Gewindepartie ausgebildete Befestigungspartie (26) zur Befestigung am Querteil (10) aufweist, das insbesondere mit einer Befestigungsvertiefung (15) oder einer anderen Befestigungseinrichtung ausgestattet ist, mit der die Befestigungspartie (26) zusammenarbeiten kann.

9. Verbindungseinrichtung nach Anspruch 8, dadurch gekennzeichnet, daß das Verbindungselement (22) schraubenähnlich ausgebildet ist und einen die Kraftübertragungspartie (25) bildenden Kopf aufweist.

10. Verbindungseinrichtung nach einem der Ansprüche 1 bis 9, dadurch gekennzeichnet, daß die Kraftübertragungspartie (25) eine derartige Flachgestalt aufweist, daß sie sich in Richtung der späteren Zugachse (34) in die Verankerungsnut (3) einsetzen läßt.

11. Verbindungseinrichtung nach einem der Ansprüche 1 bis 10, dadurch gekennzeichnet, daß die Zugelemente (24, 24') in der Verankerungsnut (3) längsbeweglich geführt sind und insbesondere einen mit einem Nutenstein vergleichbaren Aufbau haben.

12. Verbindungseinrichtung nach einem der Ansprüche 1 bis 11, dadurch gekennzeichnet, daß die Zugelemente (24, 24') insbesondere klotzähnlich ausgebildet sind und an der der Kraftübertragungspartie (25) zugewandten Stirnseite eine zur Aufnahme einer Endpartie (49) der Kraftübertragungspartie (25) dienende Ausnehmung (48) aufweisen, deren der Kraftübertragungspartie (25) zugewandte innenliegende Grundfläche zweckmäßigerweise die gegebenenfalls vorhandene Schubfläche (35) bildet.

13. Verbindungseinrichtung nach einem der Ansprüche 1 bis 12, dadurch gekennzeichnet, daß mindestens ein Zugelement (24, 24') als Verankerungsglied zur Verankerung der Zugeinrichtung (23) in der zugeordneten Verankerungsnut (3) ausgebildet ist.

## Claims

1. Connection device for sections which may be used for the construction of tables, shelves, stands or the like, for connecting a first section (1) with a cross-piece (10) running at right-angles to the former, with one end face (13) resting against a long side (14) of the first section (1) and in particular formed by a second section (2), wherein the first section (1) has on its long side (14) facing the cross-piece (10) an axially-extending anchorage slot (3), and wherein there is provided on the cross-piece (10) a fixed or fixable connection element (22) with a force transfer section (25) on opposite sides of which may act two tension elements (24, 24') braceable relative to one another by means of a clamping element (32) along the axis of the anchorage slot (3) and forming part of a tensioning device (23) anchored or anchorable in the anchorage slot (3) of the first section (1), in order to exert on the connection element (22) a tensile force drawing the cross-piece (10) - with the end face (13) leading - towards the first section (1), characterized in that each of the two tension elements (24, 24') is arranged altogether on opposite sides of the force transfer section (25), while the clamping element (32) acting on the two tension elements (24, 24') is guided past on the end face of the connection element (22) facing the slot base of the anchorage slot (3).

2. Connection device according to claim 1, characterized in that there is provided in the pressure contact zone between the tension elements (24, 24') and the force transfer section (25) on one or more of the two parts (24, 24'; 25) a shearing face (33, 35) facing the other part concerned (25; 24, 24') and running at an angle relative to a reference plane running at right-angles to the longitudinal axis (28) of the anchorage slot (3) in such a way that the compressive force exerted by the tension elements (24, 24') is converted into a tensile force acting towards the base of the anchorage slot (3).

3. Connection device according to claim 2, characterized in that the force transfer section (25) has two first shearing faces (33), each lying flat against a second shearing face (35) of the respectively assigned tension element (24, 24').

4. Connection device according to claim 2 or 3, characterized in that each shearing face (33, 35) is so inclined that, as it approaches the slot base, it moves increasingly away from the axis of tension (34) of the connection element (22) running at right-angles to the longitudinal direction (28) of the anchorage slot (3).

5. Connection device according to any of claims 2 to 4, characterized in that each shearing face (33, 35) is designed as a smooth shearing face.

6. Connection device according to any of claims 1 to 5, characterized in that the clamping element (32) is a threaded component, in particular formed by a bolt (36), capable of resting on one tension element (24) while being in screwed connection with the other tension element (24').

7. Connection device according to any of claims 1 to 6, characterized in that the force transfer section (25) is at least partially recessed in the anchorage slot, wherein expediently it does not dip at all or else dips only slightly into an anchorage section (8) of the anchorage slot (3) adjacent to the slot neck (7) of the anchorage slot (3).

8. Connection device according to any of claims 1 to 7, characterized in that the connection element (22) has a fastening section (26), in particular in the form of a threaded section, for fastening to the cross-piece (10) and provided in particular with a locating recess (15) or other locating device with which the fastening section (26) can interact.

9. Connection device according to claim 8, characterized in that the connection element (22) is in the form of a screw, and has a head forming the force transfer section (25).

10. Connection device according to any of claims 1 to 9, characterized in that the force transfer section (25) has a flat shape such that it may be inserted in the anchorage slot (3) in the direction of the subsequent axis of tension (34).

11. Connection device according to any of claims 1 to 10, characterized in that the tension elements (24, 24') are guided in the anchorage slot (3) with longitudinal movement facility and have in particular a structure comparable to a sliding block.

12. Connection device according to any of claims 1 to 11, characterized in that the tension elements (24, 24') are in particular block-shaped and have on that end face which is towards the force transfer section (25) a recess (48), serving to hold an end section (49) of the force transfer section (25), with an internal base facing the force transfer section (25) which expediently forms the shearing face (35) where provided.

13. Connection device according to any of claims 1 to 12, characterized in that one or more of the tension elements (24, 24') is designed as an anchorage element for anchoring the tensioning device (23) in the assigned anchorage slot (3).

## Revendications

1. Dispositif d'assemblage d'éléments profilés qui peuvent être utilisés pour la construction de tables, étagères, bâtis ou similaires, pour l'assemblage d'un premier élément profilé (1) avec une traverse (10) s'étendant transversalement à celui-ci, prenant appui par un côté frontal (13) contre un côté longitudinal (14) du premier élément profilé (1), laquelle traverse est formée en particulier par un deuxième élément profilé (2), le premier élément profilé (1) présentant, sur le côté longitudinal (14) tourné vers la traverse (10), une rainure d'ancrage (3) s'étendant dans la direction longitudinale et un élément de liaison (22), fixé ou pouvant être fixé sur la traverse (10), étant prévu, lequel élément de liaison présente une partie de transmission des forces (25), qui peut être sollicitée, sur des côtés opposés, par deux éléments de traction (24, 24'), pouvant être serrés l'un par rapport à l'autre dans la direction longitudinale de la rainure d'ancrage (3), au moyen d'un élément de tension (32) d'un dispositif de traction (23), ancré ou ancrable dans la rainure d'ancrage (3) du premier élément profilé (1), afin d'exercer sur l'élément de liaison (22) une force de traction tirant la traverse (10) par son côté frontal (13) en avant, en direction du premier élément profilé (1), caractérisé en ce que les deux éléments de traction (24, 24') sont disposés dans l'ensemble sur des côtés opposés l'un à l'autre de la partie de transmission des forces (25), l'élément de tension (32), agissant sur les deux éléments de traction (24, 24'), étant guidé devant le côté frontal de l'élément de liaison (22), tourné vers le fond de la rainure d'ancrage (3).

2. Dispositif d'assemblage selon la revendication 1, caractérisé en ce que dans la zone de contact de pression entre les éléments de traction (24, 24') et la partie de transmission des forces (25), il est prévu sur au moins l'un des deux éléments (24, 24' ; 25) une surface de poussée (33, 35), tournée vers l'autre élément (25 ; 24, 24'), qui est inclinée par rapport à un plan de référence, s'étendant à angle droit par rapport à l'axe longitudinal (28) de la rainure d'ancrage (3), de manière que la force de pression exercée par les éléments de traction (24, 24') est convertie en la force de traction agissant dans le sens de la profondeur de la rainure d'ancrage (3).

3. Dispositif d'assemblage selon la revendication 2, caractérisé en ce que la partie de transmission des forces (25) présente deux premières surfaces de poussée (33) qui s'appliquent chacune à plat contre une deuxième surface de poussée (35) de l'élément de traction (24, 24') correspondant.

4. Dispositif d'assemblage selon la revendication 2 ou 3, caractérisé en ce que chaque surface de poussée (33, 35) est inclinée de manière qu'à l'approche du fond de la rainure elle s'éloigne de plus en plus de l'axe de traction (34) de l'élément de liaison (22) s'étendant transversalement à la direction longitudinale (28) de la rainure d'ancrage (3).

5. Dispositif d'assemblage selon l'une des revendications 2 à 4, caractérisé en ce que chaque surface de poussée (33, 35) est conformée en surface oblique plane.

6. Dispositif d'assemblage selon l'une des revendications 1 à 5, caractérisé en ce que l'élément de tension (32) est un élément fileté, formé en particulier par une vis (36), qui peut prendre appui contre un élément de tension (24) et qui est en liaison vissée avec l'autre élément de tension (24').

7. Dispositif d'assemblage selon l'une des revendications 1 à 6, caractérisé en ce que la partie de transmission des forces (25) est au moins partiellement encastrée dans la rainure d'ancrage, en ne s'engageant avantageusement pas ou que légèrement dans une partie d'ancrage (8) de la rainure d'ancrage (3), se raccordant au col (7) de la rainure d'ancrage (3).

8. Dispositif d'assemblage selon l'une des revendications 1 à 7, caractérisé en ce que l'élément de liaison (22) comporte une partie de fixation (26) conformée en particulier en partie filetée, pour la fixation sur la traverse (10), qui est pourvue en particulier d'un évidement de fixation (15) ou d'un autre moyen de fixation, avec lequel peut coopérer la partie de fixation (26).

9. Dispositif d'assemblage selon la revendication 8, caractérisé en ce que l'élément de liaison (22) est du type vis et présente une tête formant la partie de transmission des forces (25).

10. Dispositif d'assemblage selon l'une des revendications 1 à 9, caractérisé en ce que la partie de transmission des forces (25) a une forme plate telle qu'elle peut être insérée dans la rainure d'ancrage (3), dans la direction du futur axe de traction (34).

11. Dispositif d'assemblage selon l'une des revendications 1 à 10, caractérisé en ce que les éléments de traction (24, 24') sont montés mobiles en translation longitudinalement dans la rainure d'ancrage (3) et présentent en particulier une structure comparable à un coulisseau.

12. Dispositif d'assemblage selon l'une des revendications 1 à 11, caractérisé en ce que les éléments de traction (24, 24') sont en particulier du type blocs et présentent, sur leur côté frontal tourné vers la partie de transmission des forces (25), un évidement (48) servant à recevoir une partie d'extrémité (49) de la partie de transmission des forces (25), dont la surface de base intérieure, tournée vers la partie de transmission des forces (25), forme avantageusement la surface de poussée (35) éventuellement présente.

13. Dispositif d'assemblage selon l'une des revendications 1 à 12, caractérisé en ce qu'au moins un élément de traction (24, 24') est conformé en tant qu'organe d'ancrage, en vue de l'ancrage du dispositif de traction (23) dans la rainure d'ancrage (3) correspondante.
